# EUROPEAN PATENT APPLICATION

(11) **EP 4 651 259 A1**
(43) Date of publication of application: **19.11.2025**
(21) Application number: 23923675.5
(22) Date of filing: 15.09.2023
(51) Int. Cl.: H01M 10/0587, H01M 4/13, H01M 50/538

(54) **ELECTRODE ASSEMBLY, MANUFACTURING METHOD FOR ELECTRODE ASSEMBLY, BATTERY, AND ELECTRICAL APPARATUS**

(30) Priority: 24.02.2023 CN 202310164939
(71) Applicant: Contemporary Amperex Technology Co., Limited, Ningde, Fujian 352100 (CN)
(72) Inventor: BAI, Qinglin, Ningde, Fujian 352100 (CN); FENG, Tao, Ningde, Fujian 352100 (CN); NIU, Di, Ningde, Fujian 352100 (CN)
(74) Representative: Ziebig Hengelhaupt Intellectual Property Attorneys Patentanwaltskanzlei PartGmbB
(86) International application number: PCT/CN2023/119164
(87) International publication number: WO 2024/174510

(57) **Abstract**

The present application relates to the field of batteries, and provides an electrode assembly (10), a manufacturing method for the electrode assembly (10), a battery (1) and an electrical apparatus. The electrode assembly (10) includes separators (11) and electrode plates (12), and each electrode plate (12) includes an active material portion (121) and a tab (122). The tabs (122) include weakening marks (1221), first connecting portions (1222), and second connecting portions (1223); and the weakening marks (1221) are connected between the first connecting portions (1222) and the second connecting portions (1223). The weakening marks (1221) are configured to guide the first connecting portions (1222) to be bent, so that the first connecting portions (1222) and a winding axis (L) are arranged at a preset angle (α). On this basis, the roll-like electrode assembly (10) can prevent particles from falling into the electrode assembly by means of the bent first connecting portion (1222), thereby improving the yield of the electrode assembly (10).

## Description

### CROSS-REFERENCE TO RELATED APPLICATIONS

The present application claims priority to Chinese Patent Application No. 202310164939.0, filed with the China National Intellectual Property Administration on February 24, 2023, entitled "ELECTRODE ASSEMBLY, MANUFACTURING METHOD FOR ELECTRODE ASSEMBLY, BATTERY AND ELECTRICAL APPARATUS", the entire contents of which are incorporated herein by reference.

### TECHNICAL FIELD

Embodiments of the present application relate to the field of batteries, and specifically relates to an electrode assembly, a manufacturing method for the electrode assembly, a battery and an electrical apparatus.

### BACKGROUND

An electrode assembly is a part subjected to electrochemical reaction in a battery. The electrode assembly can be processed into a roll-like structure by winding two electrode plates with opposite polarities and a separator that separates the two electrode plates. However, after the roll-like structure is formed, foreign particles are still likely to fall into the interior of the electrode assembly, resulting in decrease in the yield of the electrode assembly.

### SUMMARY

An objective of the embodiment of the present application is to provide an electrode assembly to solve the problem that after a roll-like structure is formed, foreign particles are likely to fall into the interior of the electrode assembly, resulting in decrease in the yield of the electrode assembly.

To achieve the above objective, technical solutions adopted in the embodiment of the present application are as follows:
in a first aspect, the electrode assembly is provided and includes separators and two electrode plates with opposite polarities, the two electrode plates and the separators are arranged in a winding mode, each electrode plate include an active material portion and a tab which are arranged side by side along a first direction, and the first direction is parallel to a winding axis;
each tab includes a weakening mark, a first connecting portion and a second connecting portion, in which, the weakening mark is connected between the first connecting portion and the second connecting portion, the second connecting portion is arranged on the side of the weakening mark close to the active material portion, and the first connecting portion is arranged on the side of the weakening mark facing away from the active material portion; and the weakening mark is configured to guide the first connecting portion to be bent, so that the first connecting portion and the winding axis are arranged at a preset angle, and the preset angle is greater than 0°.

According to the electrode assembly provided by this embodiment of the present application, the weakening marks are arranged on the tabs of the electrode plates, and the tabs are divided into the first connecting portions, the second connecting portions, and the weakening marks connected between the first connecting portions and the second connecting portions. On this basis, during or after winding, the first connecting portions can be guided by the weakening marks to be bent along the weakening marks relative to the second connecting portions, so that the first connecting portions and the winding axis can form a preset angle greater than 0°. Therefore, the roll-like electrode assembly can subsequently effectively block external particles from falling into the electrode assembly along a gap between two adjacent circles of electrode plates by means of the bent first connecting portions, thereby effectively ensuring and improving the yield of the electrode assembly.

In some embodiments, the electrode plates in an unfolded state are in a shape of long strips, and the weakening marks extend along an extension direction of the electrode plates.

By the above solutions, the weakening marks can extend along the extension direction of the electrode plates to form bending guide lines on the tabs, and the bending guide lines extend along the extension direction of the electrode plates; and on this basis, the first connecting portions can be bent along the weakening marks conveniently, quickly and reliably, moreover, the risk of rebounding of the first connecting portions after being bent is reduced, and the first connecting portions can maintain the bent state after being bent.

In some embodiments, the weakening marks are in a shape of discontinuous lines.

By the above solutions, the weakening marks can discontinuously weaken the structural strength of the areas where they are located, so as to form the bending guide lines on the tabs, thereby facilitating the first connecting portions to bend along the weakening marks, and helping to reduce the risk of rebounding of the first connecting portions after being bent, and helping the first connecting portions to maintain the bent state after being bent.

In some embodiments, the weakening marks include a plurality of weakening grooves which extend along the extension direction of the electrode plates, and the plurality of weakening grooves are spaced apart along the extension direction of the electrode plates.

By the above solutions, the plurality of weakening grooves spaced apart along the extension direction of the electrode plates can be configured to jointly form the weakening marks that extend along the extension direction of the electrode plates and are in the shape of discontinuous lines. On this basis, the weakening marks can be conveniently processed and molded, and can discontinuously and relatively weaken the structural strength of the areas where they are located through the corresponding weakening grooves, thereby facilitating the first connecting portions to bend along the weakening marks and to maintain the bent state after being bent.

In some embodiments, the weakening marks include a plurality of weakening holes which are spaced apart along the extension direction of the electrode plates.

By the above solution, the plurality of weakening holes spaced apart along the extension direction of the electrode plates can be configured to jointly form the weakening marks that extend along the extension direction of the electrode plates and are in the shape of discontinuous lines; and on this basis, the weakening marks can be conveniently processed and molded, and can discontinuously and relatively weaken the structural strength of the areas where they are located through the corresponding weakening holes, thereby facilitating the first connecting portions to bend along the weakening marks and to maintain the bent state after being bent.

In some embodiments, the weakening marks are in a shape of continuous lines.

By the above solutions, on one hand, the weakening marks can continuously and relatively weaken the structural strength of areas where the weakening marks are located, so that thin-wall-shaped bending guide lines are formed on the tabs, which facilitates the first connecting portions to bend along the weakening marks, and moreover, the risk of rebounding of the first connecting portions after being bent can be reduced, and the first connecting portions can maintain the bent state after being bent. On the other hand, the areas where the weakening marks are located can be guaranteed to be continuous, so that the structural strength of the areas where the weakening marks are located can be guaranteed and balanced, and the risk that local areas of the weakening marks are broken and damaged can be reduced.

In some embodiments, a plurality of weakening marks are arranged and are spaced apart along the first direction.

By the above solutions, the local areas of the weakening marks in the extension direction can be subjected to cutting treatment by discontinuous cutting, so that discontinuous weakening marks of which the parts subjected to structural strength weakening can be formed. On this basis, the weakening marks can be conveniently processed and molded, and the weakening marks can discontinuously and relatively weaken the structural strength of the areas where the weakening marks are located, and thus the first connecting portions can be bent along the weakening marks and maintain the bent state after being bent.

In some embodiments, the width of the tabs is A, the width of the first connecting portions is B, and 5%≤B/A≤40%.

By the above solutions, the proportion of the width B of the first connecting portions relative to the width A of the tabs is moderate. On this basis, the positions of the weakening marks can be moderate and the occupied area of the first connecting portions is moderate, so that the bending action of the first connecting portions can be conveniently implemented; the first connecting portions can basically shield the gap between two adjacent circles of electrode plates after being bent, thus the shielding effect of the first connecting portions on external particles after being bent can be effectively guaranteed and improved, and the yield of the electrode assembly can be effectively guaranteed and improved.

By the above solutions, the width A of the tabs can be moderate, and particularly, the remained occupied area for the second connecting portions on the tabs after the first connecting portions are bent can be moderate, so that the tabs still have enough feeding allowance for compression after the first connecting portions are bent and basically shield the gap between two adjacent circles of electrode plates, and furthermore, the tabs have enough compaction thickness and compactness after being compressed to an end surface of the electrode assembly, thereby facilitating the tabs to be conveniently and reliably connected to current collecting disc, and reducing the risk that the tabs are welded through when being welded with the current collecting discs.

In some embodiments, the width A of the tabs is 4 mm to 15mm.

By the above solution, the width A of the tabs can be moderate, and on this basis, the tabs can have the enough feeding allowance for compression after the first connecting portions are bent, so that the tabs can have the enough compaction thickness and compactness after being compressed to the end surface of the electrode assembly, which facilitates the tabs to be conveniently and reliably connected to the current collecting discs, and the risk that the tabs are welded through when being welded with the current collecting disc can be reduced. Moreover, the width A of the tabs can be guaranteed not to be too great, so that the material cost can be effectively reduced.

In some embodiments, the width B of the first connecting portions is 0.5 mm to 3 mm.

By the above solution, the width B of the first connecting portions can be reduced and the positions of the weakening marks can be moderate. On this basis, the first connecting portions can be conveniently bent along the weakening marks, and the bent first connecting portions can basically shield the gap between the two adjacent circles of electrode plates, therefore, the shielding effect of the bent first connecting portions on the external particles can be effectively guaranteed and improved, and the yield of the electrode assembly can be effectively guaranteed and improved. Furthermore, the tabs can have the enough feeding allowance for compression after the first connecting portions are bent, so that the tabs can have the enough compaction thickness and compactness after being compressed to the end surface of the electrode assembly, which facilitates the tabs to be conveniently and reliably connected to the current collecting discs.

In some embodiments, the width B of the first connecting portions is smaller than the width C of the second connecting portions.

By the above solutions, on the basis that the width B of the first connecting portions is guaranteed to be moderate, and the bent first connecting portions are guaranteed to reliably block the external particles, the width C of the second connecting portions is enabled to be larger than the width B of the first connecting portions, so that the second connecting portions can provide enough feeding allowance for compression, furthermore, the tabs can be guaranteed to have enough compaction thickness and compactness after being compressed to the end surface of the electrode assembly, which facilitates the tabs to be conveniently and reliably connected to the current collecting discs, and the risk that the tabs are welded through when being welded with the current collecting discs can be reduced.

In some embodiments, the length of the tabs is the same as the length of the active substance portions.

By the above solutions, the extension length of the tabs can be equal to the extension length of the active substance portions, so that the overcurrent capacity of the electrode assembly can be reliably enhanced, and the processes of die cutting and molding the tabs and the like are effectively simplified, and therefore, the processing convenience and the production efficiency of the electrode assembly can be effectively guaranteed and improved, and the performance and the quality of the electrode assembly can be effectively guaranteed and improved.

In some embodiments, the tabs are wound to form a multi-circle structure, and the first connecting portions of every two adjacent circles are overlapped.

By the above solutions, the first connecting portions of every two adjacent circles can be overlapped, so that the bent first connecting portions can basically and completely shield the gap between every two adjacent circles of tabs, then the shielding effect of the bent first connecting portions on the external particles can be effectively guaranteed and improved, and the yield of the electrode assembly can be effectively guaranteed and improved.

In a second aspect, a manufacturing method for an electrode assembly is provided, and is used for manufacturing the electrode assembly provided by the embodiment of the present application; and the manufacturing method for the electrode assembly includes the following steps:
providing a separator and two electrode plates with opposite polarities, in which, each electrode plate includes an active substance portion and a tab which are arranged in parallel along a first direction, the tab includes a weakening mark, a first connecting portion and a second connecting portion, the weakening mark is connected between the first connecting portion and the second connecting portion, the second connecting portion is arranged on the side of the weakening mark close to the corresponding active substance portion, and the first connecting portion is arranged on the side of the weakening mark facing away from the active substance portion;
winding the two electrode plates and the separator around a winding axis to form the electrode assembly, and bending the first connecting portions along the weakening marks so that the first connecting portions and the winding axis are arranged at a preset angle, in which, the preset angle is greater than 0°, and the winding axis is parallel to the first direction;
shaping the tabs to make the first connecting portions, the weakening marks and part of the second connecting portions at a compressed state.

By the above solutions, the electrode assembly provided by the embodiment of the present application can be conveniently and rapidly manufactured. When manufacturing the electrode assembly, the first connecting portions can be bent along the weakening marks during winding so that the bent first connecting portions can partially shield the gap between the adjacent circles of the tabs; and on this basis, in steps of "shaping the tabs" and the like after winding, the external particles are effectively prevented from falling into the electrode assembly along the gap between the adjacent circles of the tabs by means of the bent first connecting portions, thereby effectively guaranteeing and improving the yield of the electrode assembly.

In some embodiments, the preset angle is 30° to 90°.

By the above solutions, during winding, the first connecting portions of the tabs can be bent along the weakening marks, so that the first connecting portions and the winding axis form an angle of 30° to 90°. On this basis, the bending effect of the first connecting portions can be ensured, and particularly, the shielding effect of the first connecting portions on the gap between adjacent circles of tabs after being bent can be ensured.

In a third aspect, a battery is provided and includes the electrode assembly provided by the embodiment of the present application.

By the above solutions, the quality and the use safety of the battery can be ensured and improved by using the electrode assembly provided by the embodiment of the present application.

In a fourth aspect, an electrical apparatus is provided and includes the battery provided by the embodiment of the present application.

By the above solutions, the quality and the use safety of the electrical apparatus can be ensured and improved by using the battery provided by the embodiment of the present application.

### BRIEF DESCRIPTION OF THE DRAWINGS

In order to clearly illustrate the technical solutions in the embodiments of the present application, a brief introduction to the accompanying drawings needed in the description of the embodiments or related technology will be presented below; and obviously, the accompanying drawings described below are merely some embodiments of the present application, and for those of ordinary skill in the art, other accompanying drawings can also be obtained based on these accompanying drawings without creative labor.
FIG. 1 is a schematic structural diagram of a vehicle provided by an embodiment of the present application;
FIG. 2 is an exploded schematic diagram of a battery provided by an embodiment of the present application;
FIG. 3 is a schematic structural diagram of a battery cell provided by an embodiment of the present application;
FIG. 4 is a state schematic diagram of an electrode assembly during winding provided by an embodiment of the present application;
FIG. 5 is a schematic structural diagram of an electrode assembly after winding provided by an embodiment of the present application;
FIG. 6 is a local schematic diagram of a longitudinal section of an electrode assembly provided in FIG. 5, in which, the longitudinal section of the electrode assembly refers to a section which passes through a winding axis and is parallel to the winding axis;
FIG. 7 is a state schematic diagram of a tab during compressing provided by an embodiment of the present application;
FIG. 8 is a schematic structural diagram of an electrode assembly after tab shaping provided by an embodiment of the present application;
FIG. 9 is a schematic structural diagram of an electrode plate in an unfolded state provided by an embodiment of the present application;
FIG. 10 is an enlarged diagram of an area D in FIG. 9, in which, a weakening mark includes a plurality of weakening grooves spaced apart along an extension direction of an electrode plate;
FIG. 11 is a local schematic diagram of an electrode plate provided by another embodiment of the present application, in which, a weakening mark includes a plurality of weakening holes spaced apart along an extension direction of an electrode plate;
FIG. 12 is a local schematic diagram of an electrode plate provided by another embodiment of the present application, in which, weakening mark is in a shape of continuous lines;
FIG. 13 is a schematic structural diagram of an electrode plate provided by another embodiment of the present application, in which, a plurality of weakening marks are arranged; and
FIG. 14 is a flowchart of a manufacturing method for an electrode assembly provided by an embodiment of the present application.

Reference numerals:
1-battery; 2-controller; 3-motor; 100-battery unit; 200-box body; 201-first portion; 202-second portion;
10-electrode assembly; 11-separator; 12-electrode plate; 121-active material portion; 122-tab; 1221-weakening mark; 12211-weakening groove; 12212-weakening hole; 1222-first connecting portion; 1223-second connecting portion; α-preset angle; 13-main body portion; 20-case; 30-current collecting disc; and 40- terminal post.

### DETAILED DESCRIPTION

In order to make the technical problems, technical solutions, and beneficial effects to be solved by the present application clear, the following is a detailed explanation of the present application in conjunction with the accompanying drawings and embodiments. It should be understood that the specific embodiments described herein are merely used to explain the present application but are not intended to limit the present application.

In the descriptions of the present application, it should be understood that orientations or positional relationships indicated by "length", "width", "upper", "lower", "front", "rear", "left", "right", "vertical", "horizontal", "top", "bottom", "inner", "outer", and the like are orientations or positional relationships as shown in the drawings, and are only for the purpose of facilitating and simplifying the descriptions of the present application instead of indicating or implying that devices or elements indicated must have particular orientations, and be constructed and operated in the particular orientations, so that these terms are not construed as limiting The present application.

In addition, the terms "first" and "second" are used for descriptive purposes only, and cannot be construed as indicating or implying relative importance or implicitly indicating the number of technical features indicated. From this, features defined as "first" and second" may explicitly or implicitly include one or more features. In the description of the present application, "plurality" means two or more, unless otherwise expressly and specifically defined.

In the present application, unless otherwise expressly specified and limited, the terms "mount," "connected," "connect" and "fix" should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or the interaction of two elements. For those of ordinary skill in the art, the specific meaning of the above terms in the present application may be understood on a case-by-case basis.

At least one electrode assembly is usually arranged in a battery, and the electrode assembly is a part subjected to electrochemical reaction in the battery. In some cases, when the electrode assembly is manufactured, two electrode plates with opposite polarities and a separator that separates the two electrode plates are processed in a winding way to form a roll-shaped structure. However, after the roll-shaped structure is formed by winding, the electrode assembly will also be subjected to some processing procedures and assembling procedures with other parts of the battery. In this period, particles in the environment and external particles such as particles generated during processing and assembling easily fall into the electrode assembly along a gap between two adjacent circles of electrode plates, resulting in decrease in the yield of the electrode assembly.

Therefore, some embodiments of the present application provide an electrode assembly; according to the electrode assembly, weakening marks can be arranged on tabs of the electrode plates, and the tabs are divided into first connecting portions, second connecting portions, and weakening marks connected between the first connecting portions and the second connecting portions. On this basis, during or after winding, the first connecting portions can be guided by the weakening marks to be bent along the weakening marks relative to the second connecting portions, so that the first connecting portions and the winding axis can form a preset angle greater than 0°. Therefore, the roll-like electrode assembly can subsequently effectively block external particles from falling into the electrode assembly along a gap between two adjacent circles of electrode plates by means of the bent first connecting portions, thereby effectively ensuring and improving the yield of the electrode assembly.

The electrode assembly disclosed by the embodiment of the present application can be applicable to the battery. The battery disclosed by the embodiment of the present application can be the minimum unit for storing and outputting electric energy, namely a battery cell; and it can also be a modular structure including one or more battery cells to provide higher voltage and capacity, such as a battery module or a battery pack; and it is not limited in the present application. The battery cell can be a lithium-ion secondary battery, a lithium-ion primary battery, a lithium-sulfur battery, a sodium-lithium ion battery, a sodium-ion battery or a magnesium-ion battery and the like; the battery cell can be in a shape of a cylinder shape, a flat body, a cuboid or other shapes; the battery cell can be subjected to different packaging modes to form a cylindrical battery cell, a square battery cell or a soft package battery cell and the like; and it is not limited in the present application.

The electrical apparatus disclosed by the embodiment of the present application can be used in an electrical apparatus using the battery as a power source, or various energy storage systems using the battery as an energy storage element. The electrical apparatus can be, but not limited to, a vehicle, a mobile phone, a portable device, a laptop, a ship, a spacecraft, an electric toy, a power tool, and the like. The vehicle may be a fuel vehicle, a gas vehicle, or a new energy vehicle, and the new energy vehicle may be a battery electric vehicle, a hybrid electric vehicle, an extended range vehicle, and the like. The spacecraft includes an airplane, a rocket, a space shuttle, a spaceship, and the like. The electric toy may include fixed or mobile electric toys, such as a game machine, an electric vehicle toy, an electric ship toy, an electric airplane toy, and the like. The electric tool includes an electric tool for metal cutting, an electric tool for grinding, an electric tool for assembling, and an electric tool for railways, such as an electric drill, an electric grinder, an electric wrench, an electric screwdriver, an electric hammer, an electric impact drill, a concrete vibrator, and an electric planer.

To illustrate the technical solutions according to the present application, the following detailed description is provided in conjunction with specific drawings and embodiments, and taking "the electrical apparatus being a vehicle" as an example.

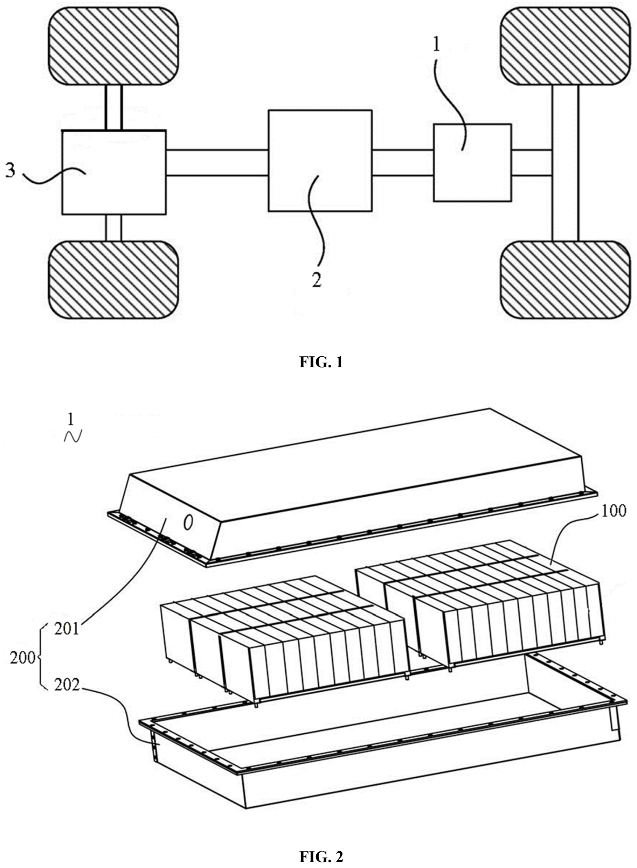

Please refer to FIG. 1. FIG. 1 is a schematic structural diagram of a vehicle according to some embodiments of the present application. The vehicle may be a fuel vehicle, a gas vehicle, or a new energy vehicle, and the new energy vehicle may be a battery electric vehicle, a hybrid electric vehicle, an extended range vehicle, and the like. The interior of the vehicle is provided with a battery 1, and the battery 1 may be provided at the bottom or head or tail of the vehicle. The battery 1 is configured to supply power to the vehicle. For example, the battery 1 can serve as an operational power source for the vehicle. The vehicle may further include a controller 2 and a motor 3. The controller 2 is used to control the battery 1 to power the motor 3, for example, for meeting operating power demands when the vehicle is starting, navigating, and traveling.

In some embodiments of the present application, the battery 1 can be used as an operation power supply of the vehicle, can also be used as a driving power supply of the vehicle, and replaces or partially replaces fuel oil or natural gas to provide driving power for the vehicle.

With reference to FIG. 2, FIG. 2 is an exploded schematic diagram of the battery 1 provided by some embodiments of the present application. The battery 1 includes a battery unit 100 and a box body 200, and the battery unit 100 is accommodated in the box body 200. The box body 200 is configured to provide an accommodating space for the battery unit 100, and the box body 200 can be of various structures. In some embodiments, the box body 200 can include a first portion 201 and a second portion 202 which are mutually covered and jointly define the accommodating space for accommodating the battery unit 100. The second portion 202 can be of a hollow structure with one end opened, and the first portion 201 can be of a plate-shaped structure and covers the opened side of the second portion 202 so that the first portion 201 and the second portion 202 jointly define the accommodating space; both the first portion 201 and the second portion 202 can also be of hollow structures with one side opened, and the opened side of the first portion 201 covers the opened side of the second portion 202. Definitely, the box body 200 formed by the first portion 201 and the second portion 202 can be in various shapes, such as a cylinder and a cuboid.

In the battery 1, one or a plurality of battery unit 100 can be provided; and the plurality of battery units 100 can be connected in series or in parallel or in series-parallel connection, and the series-parallel connection refers to that the plurality of battery units 100 are connected in both series and parallel.

Specifically, the battery unit 100 can be a battery cell. The plurality of battery cells can be directly connected in series or in parallel or in series-parallel connection, and then, a whole body formed by the plurality of battery cells is accommodated in the box body 200. Or, the battery unit 100 can be a battery module or a battery module set, and the plurality of battery cells be connected in series or in parallel or in series-parallel connection to form the modular structure, namely, the battery module or the battery module set; and the plurality of battery modules or the battery cell module sets are connected in series or in parallel or in series-parallel connection to form a whole body which is accommodated in the box body 200.

Definitely, the battery 1 can also include other structures, for example, the battery 1 can also include a bus component (not shown in the figure) for realizing electric connection among the plurality of battery units 100.

Definitely, in some embodiments, the battery 1 cannot include the box body 200, but the plurality of battery units 100 are electrically connected, are formed into a whole body through necessary fixing structures and then are assembled into the electrical apparatus.

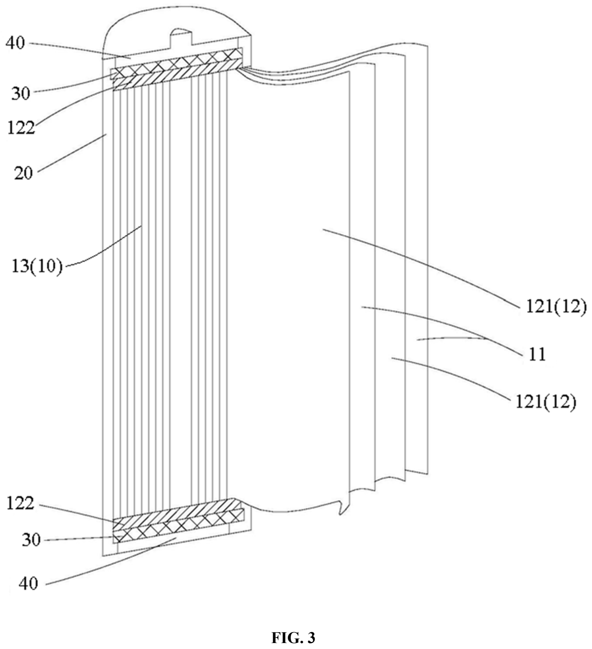

With reference to FIG. 3, FIG. 3 is a schematic structural diagram of a battery cell provided by some embodiments of the present application. The battery unit is the minimum unit for storing and outputting electric energy. The battery unit includes the components such as the electrode assembly 10, a case 20, a current collecting disc 30, a terminal post 40 and an electrolyte solution (not shown in the figure).

The case 20 is a component for forming an internal environment of the battery cell and isolating the internal environment of the battery cell from an external environment. The internal environment enclosed by the case 20 can be used for accommodating components such as the electrode assembly 10 and the electrolyte solution. The case 20 can be in various shapes and various sizes, such as a cuboid, a cylinder and a hexagonal prism. Specifically, the shape of the case 20 can be determined according to the specific shape and size of the electrode assembly 10. The case 20 can be made of materials with certain hardness and strength, thus the case 20 is difficult to deform when being extruded and collided, and the battery cell can have higher structural strength, and the safety performance can also be improved. Definitely, in the embodiments, there is no unique limitation on the materials of the case 20, and the materials of the case 20 can be copper, iron, aluminum, stainless steel, aluminum alloy, plastic and the like.

The electrode assembly 10 is a part subjected to electrochemical reaction in the battery cell. The case 20 can internally include one or more electrode assemblies 10. The electrode assembly 10 includes separators 11 and two electrode plates 12 with opposite polarities. The opposite polarity of the two electrode plates 12 refers to that one of the two electrode plates 12 is a positive electrode plate and the other one is a negative electrode plate. The electrode plates 12 are continuous electrode plates 12, and the separators 11 are continuous separators 11. Two continuous separator 11 are provided, in which, one continuous separator 11 is arranged between the two continuous electrode plates 12 and the other continuous separator 11 is arranged on one side of one continuous electrode plate 12 facing away from the other continuous electrode plate 12, so that the separator 11 separates the two electrode plates 12. The two electrode plates 12 and the separator 11 that separates the two electrode plates 12 can be wound to form a roll-like structure. In the roll-like electrode assembly 10, active substance portions 121 (namely parts with active substances) of the two electrode plates 12 form a main body portion 13 of the electrode assembly 10, and portions without the active substances of the two electrode plates 12 form tabs 122 respectively. The tabs 122 are current transmission ends of the electrode assembly 10 and are connected to current collecting discs 30 and configured to transmit current. The tabs 122 of the two electrode plates 12 are located at the two ends of the main body portion 13 respectively. The tabs 122 of the two electrode plates 12 are axially compressed and are shaped on corresponding end surfaces of the main body portion 13 so as to form dense tab end surfaces, so that the tabs 122 are conveniently connected to the corresponding current collecting discs 30.

The current collecting discs 30 are parts which are connected to the tabs 122 in the battery cell to be used as electric energy lead-out ends of the electrode assembly 10. Two current collecting discs 30 are provided and are arranged at the two ends of the electrode assembly 10 respectively and are connected to the two tabs 122 respectively.

Two poles 40 are provided and are mounted at the two ends of the case 20 respectively and are connected to the two current collecting discs 30 respectively. The poles 40 can be used as the electric energy lead-out ends of the battery cell.

The electrolyte solution is a solution for infiltrating the electrode assembly 10. When the battery cell is charged, one electrode plate 12 serving as the positive electrode plate will generate active ions, and the generated active ions can penetrate through pores of the separator 11, move to the electrode plate 12 serving as the negative electrode plate via the electrolyte solution, and are embedded in a negative electrode active substance. On the contrary, when the battery cell is discharged, the active ions embedded in the negative active substance are removed, and the removed active ions can penetrate through the pores of the separator 11, move to the electrode plate 12 serving as the positive electrode plate via the electrolyte solution, and are embedded in a positive electrode active material.

Definitely, in some embodiments, the battery cell can further include a pressure relief mechanism (not shown in the figure) for relieving internal pressure when the internal pressure or temperature of the battery cell reaches a threshold, an insulating member (not shown in the figure) for isolating the case 20 from an electrical connection component therein to reduce the risk of short circuit, and the like, which is not limited in the embodiments and will not be listed.

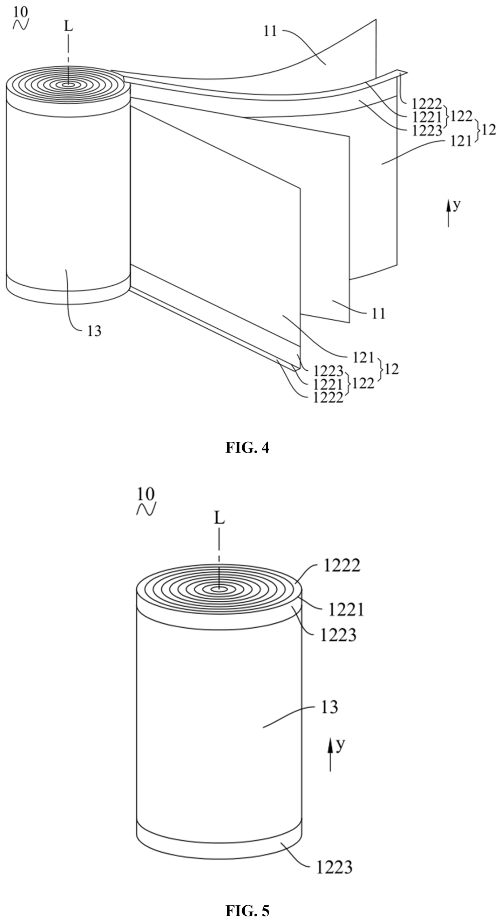

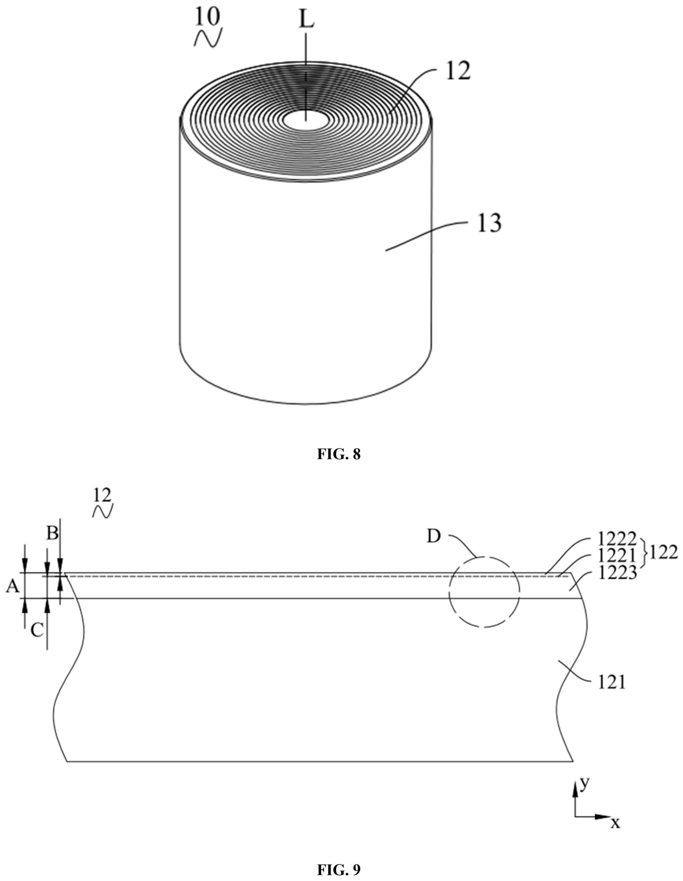

With reference to FIG. 4 to FIG. 8, some embodiments of the present application provide the electrode assembly 10, in which, FIG. 4 to FIG. 7 show an intermediate state of the electrode assembly 10 during molding, and FIG. 8 shows a final state of the electrode assembly 10 during basic molding.

The electrode assembly 10 includes the separator 11 and the two electrode plates 12 with opposite polarities, the two electrode plates 12 and the separator 11 are arranged in a winding manner, each electrode plate 12 includes an active substance portion 121 and a tab 122 which are arranged side by side along a first direction y, and the first direction y is parallel to a winding axis L. Each tab 122 includes a weakening mark 1221, a first connecting portion 1222 and a second connecting portion 1223, in which, the weakening mark 1221 is connected between the first connecting portion 1222 and the second connecting portion 1223, the second connecting portion 1223 is arranged on the side of the weakening mark 1221 close to the active material portion 121, and the first connecting portion 1222 is arranged on the side of the weakening mark 1221 facing away from the active material portion 121. The weakening mark 1221 is used for guiding the first connecting portion 1222 to be bent, so that the first connecting portion 1222 and the winding axis L are arranged at a preset angle α that is greater than 0°.

It is to be noted that the electrode assembly 10 is a part subjected to electrochemical reaction in the battery. The electrode assembly 10 includes two electrode plates 12 and separators 11 which are arranged in a laminated manner. The two electrode plates 12 are opposite in polarity, namely, one of the two electrode plates 12 is a positive electrode plate, and the other one of the two electrode plates 12 is a negative electrode plate.

The electrode plates 12 are continuous electrode plates 12, and are in a shape of long strips in an unfolded state. The parts with active substances of the electrode plates 12 form the active substance portions 121 of the electrode plates 12, the parts without the active substances of the electrode plates 12 form the tabs 122 of the electrode plates 12, and the active substance portions 121 and the tabs 122 are arranged side by side along the first direction y. When the electrode plates 12 are in the unfolded state, the first direction y is vertical to an extension direction x of the electrode plates 12.

The separators 11 are continuous separators 11, and two continuous separators 11 are arranged. As shown in FIG. 4, before winding, one continuous separator 11 is arranged between the two continuous electrode plates 12 in a laminated manner, and the other continuous separator 11 is arranged on the side of one continuous electrode plate 12 facing away from the other continuous electrode plate 12 in a laminated manner.

Based on the this, the two electrode plates 12 and the two separators 11 which are arranged in a laminated manner can be wound around the winding axis L to form the roll-like electrode assembly 10, at the moment, the extension direction x of the electrode plates 12 corresponds to the winding direction, and the first direction y is parallel to the winding axis L.

In the roll-like electrode assembly 10 formed by winding, the two continuous separators 11 can separate the two electrode plates 12 so as to prevent the two electrode plates 12 from being in direct contact to cause short circuit. Moreover, the active substance portions 121 of the two electrode plates 12 can form a main body portion 13 of the electrode assembly 10, and the tabs 122 of the two electrode plates 12 are positioned at the two ends of the main body portion 13 respectively. As shown in FIG. 3, the tabs 122 can be used as current transmission ends of the electrode assembly 10 and are connected to current collecting discs 30 and configured to transmit current.

It is also to be noted that before winding, the weakening marks 1221 are preset on the tabs 122 of the electrode plates 12, and on this basis, the tabs 122 can be divided into the first connecting portions 1222, the second connecting portions 1223 and the weakening marks 1221 connected between the first connecting portions 1222 and the second connecting portions 1223. The second connecting portions 1223 are arranged on the sides of the weakening marks 1221 close to the active substance portions 121, that is, the parts, arranged between the weakening marks 1221 and the active substance portions 121, of the tabs 122 are the second connecting portions 1223. The first connecting portions 1222 are arranged on the sides of the weakening marks 1221 facing away from the active substance portions 121, that is, the parts, arranged between the weakening marks 1221 and the outer edges thereof, of the tabs 122 are the first connecting portions 1222.

The weakening marks 1221 can weaken the structural strength of the areas where the weakening marks 1221 are located and form bending guide lines. On this basis, during or after winding, the first connecting portions 1222 can be guided by the weakening marks 1221 to be bent relative to the second connecting portions 1223 along the weakening marks 1221, so that the first connecting portions 1222 and the winding axis L are arranged at a preset angle α larger than 0°. Therefore, for the electrode assembly 10 of the roll-like structure, the bent first connecting portions 1222 can effectively block external particles from falling into the electrode assembly 10 along a gap between every two adjacent circles of electrode plates 12 subsequently, which effectively guarantees and improves the yield of the electrode assembly 10.

In this way, according to the electrode assembly 10 provided by the embodiment of the present application, the weakening marks 1221 are arranged on the tabs 122 of the electrode plates 12, and the tabs 122 can be divided into the first connecting portions 1222, the second connecting portions 1223, and the weakening marks 1221 connected between the first connecting portions 1222 and the second connecting portions 1223. On this basis, during or after winding, the first connecting portions 1222 can be guided by the weakening marks 1221 to be bent relative to the second connecting portion 1223 along the weakening marks 1221, so that the first connecting portions 1222 and the winding axis L can form the preset angle α that is greater than 0°. Therefore, for the roll-like electrode assembly 10, the bent first connecting portions 1222 can effectively prevent the external particles from falling into the electrode assembly 10 along the gap between two adjacent circles of electrode plates 12 subsequently, which effectively guarantees and improves the yield of the electrode assembly 10.

With reference to FIG. 9, in some embodiments of the present application, the electrode plates 12 in an unfolded state are in a shape of long strip, and the weakening marks 1221 extend along the extension direction x of the electrode plates 12.

It is to be noted that the electrode plates 12 are continuous electrode plates 12 and are in the shape of long strips in the unfolded state, namely, the electrode plates 12 have the extension direction. The extension direction of the tabs 122 corresponds to the extension direction x of the electrode plates 12. The weakening marks 1221 extend along the extension direction x of the electrode plates 12, namely the weakening marks 1221 are linear marks extending along the extension direction of the tabs 122.

By the above solutions, the weakening marks 1221 can extend along the extension direction x of the electrode plates 12 to form the bending guide lines on the tabs 122, and the bending guide lines extend along the extension direction x of the electrode plates 12; and on this basis, the first connecting portions 1222 can be conveniently, quickly and reliably bent along the weakening mark 1221, thus reducing the risk of rebounding of the first connecting portions 1222 after being bent, and facilitating the first connecting portion 1222 to maintain in a bent state after being bent.

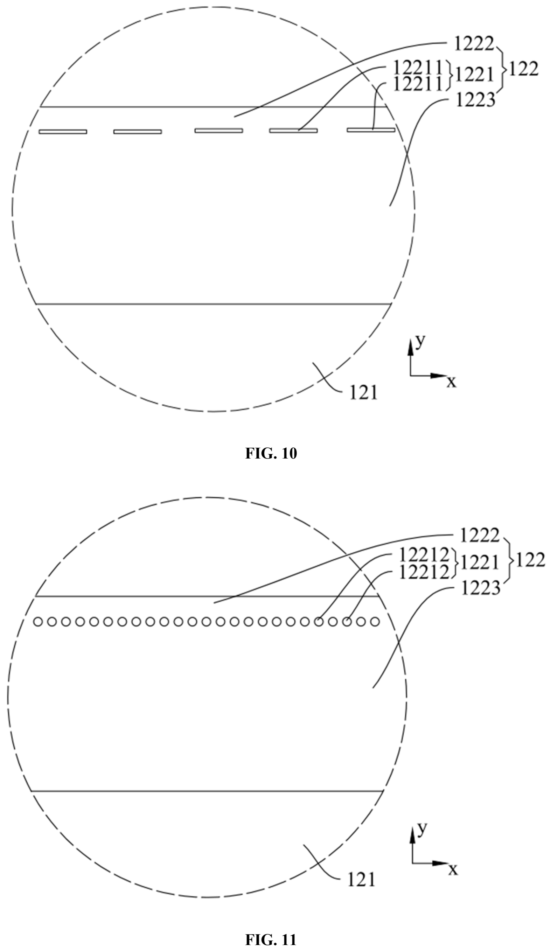

With reference to FIG. 9 and FIG. 10, in some embodiments of the present application, the weakening marks 1221 are in a shape of discontinuous lines.

It is to be noted that the weakening marks 1221 are linear marks extending along the extension direction x of the electrode plates 12, and the linear marks are discontinuous in the extension direction (corresponding to the extension direction x of the electrode plates 12) of the weakening marks 1221.

On this basis, by the above solutions, the weakening marks 1221 can discontinuously and relatively weaken the structural strength of the areas where the weakening marks 1221 are located, so as to form the bending guide lines on the tabs 122, and therefore the first connecting portions 1222 can be conveniently bent along the weakening marks 1221, the risk of the rebounding of the first connecting portions 1222 after being bent can be reduced, and the first connecting portions 1222 can maintain the bent state after being bent.

With reference to FIG. 9 and FIG. 10, in some embodiments of the present application, the weakening marks 1221 include a plurality of weakening grooves 12211 which extend in the extension direction x of the electrode plates 12, and the weakening grooves 12211 are spaced apart in the extension direction x of the electrode plates 12.

It is to be noted that the weakening marks 1221 includes the plurality of weakening grooves 12211. The weakening grooves 12211 are formed in the surfaces of the tabs 122. The weakening grooves 12211 can be formed in a through mode or not in a through mode in the depth direction, that is, the weakening grooves 12211 can penetrate through the tabs 122 in the thickness direction of the tabs 122, or cannot penetrate through the tabs 122. Each weakening groove 12211 extends in the extension direction x (namely the extension direction of the corresponding tab 122) of the corresponding electrode plate 12. The weakening grooves 12211 are sequentially arranged in the extension direction x of the electrode plates 12, and every two adjacent weakening grooves 12211 are spaced apart from each other.

By the above solution, the plurality of weakening grooves 12211 are spaced apart along the extension direction x of the electrode plates 12 and jointly form the weakening marks 1221 which extend along the extension direction x of the electrode plates 12 and are in the shape of discontinuous lines; and on this basis, the weakening marks 1221 can be conveniently processed and molded, and the weakening mark 1221 can discontinuously and relatively weaken the structural strength of the areas where they are located through the corresponding weakening grooves 12211, so that the first connecting portions 1222 can be conveniently bent along the weakening marks 1221 and maintain the bent state after being bent.

With reference to FIG. 9 and FIG. 11, in some embodiments of the present application, the weakening marks 1221 include a plurality of weakening holes 12212 which are spaced apart along the extension direction x of the electrode plates 12.

It is to be noted that the weakening marks 1221 include the plurality of weakening holes 12212. The weakening holes 12212 are formed in the surfaces of the tab 122. The weakening holes 12212 can be round holes, square holes or holes with other shapes, and the weakening holes 12212 can be blind holes or through holes, which are not limited in the embodiments. The plurality of weakening holes 12212 are arranged in sequence along the extension direction x of the electrode plates 12 and are spaced apart from each other.

By the above solution, the plurality of weakening holes 12212 are spaced apart along the extension direction x of the electrode plates 12 and jointly form the weakening marks 1221 which extend along the extension direction x of the electrode plates 12 and are in the shape of discontinuous lines; and on this basis, the weakening marks 1221 can be conveniently processed and molded, and the weakening mark 1221 can discontinuously and relatively weaken the structural strength of the areas where they are located through the corresponding weakening holes 12212, so that the first connecting portions 1222 can be conveniently bent along the weakening marks 1221 and maintain the bent state after being bent.

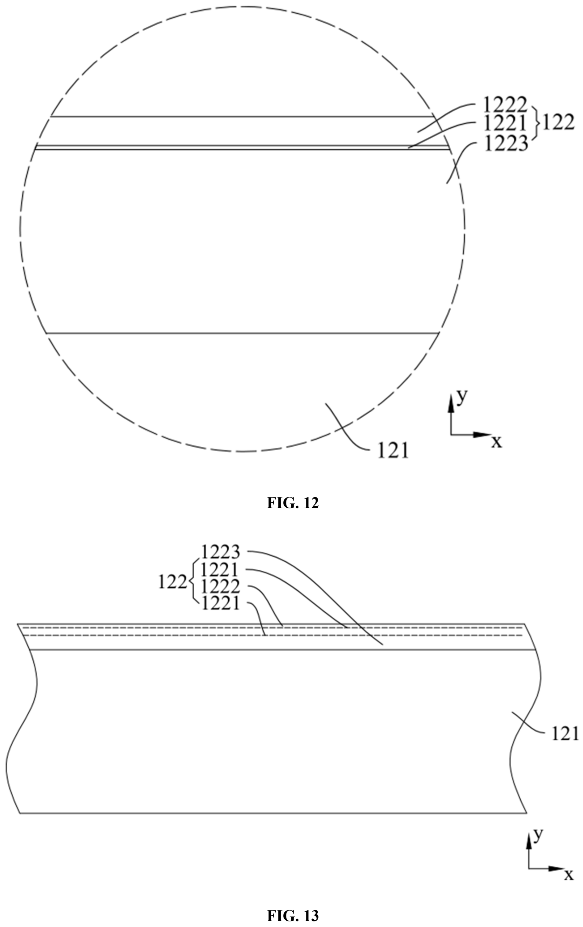

With reference to FIG. 9 and FIG. 12, in some embodiments of the present application, the weakening marks 1221 are in the shape of continuous lines.

It is to be noted that the weakening marks 1221 are linear marks which extend along the extension direction x of the electrode plates 12. The linear marks are continuous in the extension direction of the weakening marks 1221.

Based on the this, by the above solutions, on one hand, the weakening marks 1221 can continuously and relatively weaken the structural strength of the areas where they are located, so that thin-wall-shaped bending guide lines are formed on the tabs 122, the first connecting portions 1222 can be conveniently bent along the weakening marks 1221, the risk of the rebounding of the first connecting portions 1222 after being bent can be reduced, and the first connecting portions 1222 can maintain the bent state after being bent. On the other hand, the areas where the weakening marks 1221 are located can be conveniently guaranteed to be continuous, so that the structural strength of the areas where the weakening marks 1221 are located can be guaranteed and balanced, and the risk of breakage and damage of the local areas of the weakening marks 1221 can be reduced.

With reference to FIG. 9 and FIG. 10, in some embodiments of the present application, the weakening marks 1221 are formed by discontinuous cutting.

It is to be noted that the local areas of the weakening marks 1221 in the extension direction can be subjected to cutting treatment in a discontinuous cutting way so as to form the weakening marks 1221. The formed weakening marks 1221 are in the shape of discontinuous lines, which can discontinuously weaken the structural strength of the cut parts. In other words, in the extension direction of the weakening mark 1221, the parts with structural strength weakened are subjected to the cutting treatment, namely, the parts with structural strength weakened are arranged in a through mode. The cutting treatment can be implemented by adopting but not limited to laser cutting or knife die cutting.

Therefore, by the above solution, the local areas of the weakening marks 1221 in the extension direction can be subjected to cutting treatment in a discontinuous cutting way so to form the discontinuous weakening marks 1221 of which the parts with structural strength weakened are subjected to the cutting treatment. On this basis, the weakening marks 1221 can be conveniently processed and molded, and the weakening marks 1221 can discontinuously and relatively weaken the structural strength of the areas where they are located, so that the first connecting portions 1222 can be conveniently bent along the weakening marks 1221 and maintain in the bent state after being bent.

With reference to FIG. 12, in some embodiments of the present application, the weakening marks 1221 are formed by an imprinting mode.

It is to be noted that the local area or the whole area of the weakening marks 1221 in the extension direction can be imprinted to form the weakening marks 1221. The formed weakening marks 1221 can be in the shape of continuous lines or discontinuous lines. The thickness of the parts with structural strength weakened is set to be smaller than the thickness of the tabs 122, that is, the parts with structural strength weakened are in a thin wall shape and are not cut or not in through.

Therefore, by the above solution, the local area of the weakening marks 1221 in the extension direction can be imprinted to form the discontinuous weakening marks 1221, and the parts with structural strength weakened of the weakening marks 1221 are thinned; or, the whole area of the weakening marks 1221 in the extension direction can be imprinted to form the continuous weakening marks 1221 with the located area being thinned. On this basis, the weakening marks 1221 can be conveniently processed and molded, and the weakening marks 1221 can effectively weaken the structural strength of the corresponding area, so that the first connecting portions 1222 can be bent along the weakening marks 1221 and maintain the bent state after being bent.

With reference to FIG. 13, in some embodiments of the present application, a plurality of weakening marks 1221 are arranged and are spaced apart along the first direction y.

It is to be noted that the tabs 122 can be provided with the plurality of weakening marks 1221. The plurality of weakening marks 1221 are sequentially arranged and are spaced apart along the first direction y. Each weakening mark 1221 can be used as the bending guide line, that is, the first connecting portions 1222 on the side of any weakening mark 1221 facing away from the corresponding active substance portion 121 can be bent along the weakening mark 1221, that is, the area between the any weakening mark 1221 and the outer edge of the corresponding tab 122 in the first direction y can be used as the corresponding first connecting portion 1222.

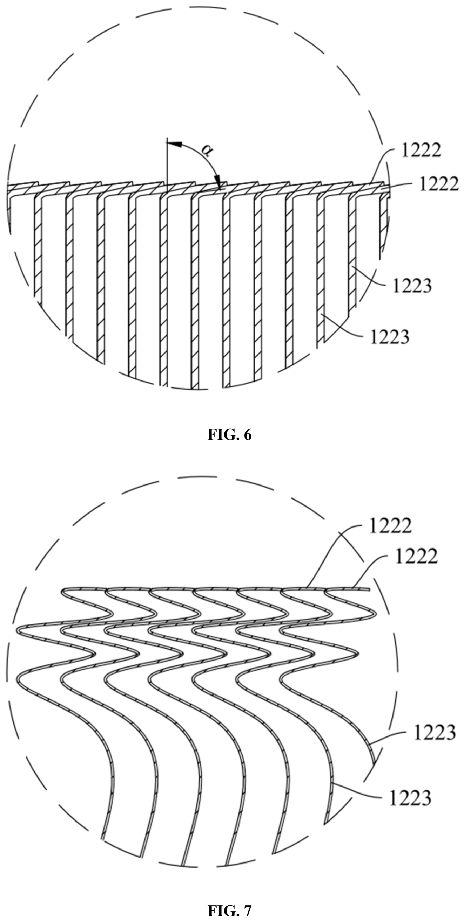

With reference to FIG. 5 and FIG. 6, by the above solution, the plurality of weakening marks 1221 that are spaced apart along the first direction y can be arranged on the tabs 122 of the electrode plates 12 to form a plurality of bending guide lines. On this basis, during or after winding, the first connecting portion 1222 on the side of any weakening mark 1221 facing away from the corresponding active substance portion 121 can be bent along the weakening mark 1221, and the first connecting portion 1222 and the winding axis L can form a preset angle α that is greater than 0°. Therefore, for the roll-like electrode assembly 10, the bent first connecting portions 1222 can conveniently, quickly and effectively block the external particles from falling into the electrode assembly 10 along the gap between two adjacent circles of electrode plates 12, so that the yield of the electrode assembly 10 can be effectively guaranteed and improved.

With reference to FIG. 9, in some embodiments of the present application, the width of the tabs 122 is A, the width of the first connecting portions 1222 is B, 5%≤B/A≤40%.

It is to be noted that when the electrode plates 12 are in the unfolded state, the width A of the tabs 122 refer to the size of the tabs 122 in the first direction y, the width B of the first connecting portions 1222 refers to the size of the first connecting portions 1222 in the first direction y, and B<A.

Under the same unit, the ratio of the width B of the first connecting portions 1222 to the width A of the tabs 122 is B/A. In the embodiments, B/A is greater than or equal to 5%, and B/A is less than or equal to 40%.

With reference to FIG. 5 and FIG. 6, by the above solution, the proportion of the width B of the first connecting portions 1222 relative to the width A of the tabs 122 is moderate. On this basis, the positions of the weakening marks 1221 can be moderate, and the occupied area of the first connecting portions 1222 can be moderate, so that the bending action of the first connecting portion 1222 can be conveniently implemented, the gap between two adjacent circles of electrode plates 12 can be basically shielded by the first connecting portion 1222 after being bent, the shielding effect of the bent first connecting portions 1222 on the external particles can be effectively guaranteed and improved, and the yield of the electrode assembly 10 can be effectively guaranteed and improved.

In addition, with reference to FIG. 3, the tabs 122 will be axially compressed and shaped on corresponding end surfaces of the main body portion 13 later to form compact tab end surfaces, and thus the tabs 122 are conveniently connected to the corresponding current collecting discs 30. Therefore, by the above solution, the width A of the tabs 122 can also be moderate, particularly, the remained occupied area for the second connecting portions 1223 on the tabs 122 after the first connecting portions 1222 are bent are moderate, so that the tabs 122 still have enough feeding allowance for compression after the first connecting portions 1222 are bent and basically shield the gap between two adjacent circles of electrode plates 12, the tabs 122 can still have enough compaction thickness and compactness after being compressed to the end surface of the electrode assembly 10, which facilitates reliable connection between the tabs 122 and the current collecting discs 30, and the risk that the tabs 122 are welded through while being welded with the current collecting discs 30.

With reference to FIG. 9, in some embodiments of the present application, the width A of the tabs 122 is 4 mm to 15 mm.

It is to be noted that the width A of the tabs 122 is larger than or equal to 4 mm and smaller than or equal to 15 mm.

With reference to FIG. 6, FIG. 7 and FIG. 8, by the above solution, the width A of the tabs 122 can be moderate, and on this basis, the tab 122 can have enough feeding allowance for compression after the first connecting portions 1222 are bent, so that the tabs 122 can still have enough compaction thickness and compactness after being compressed to the end surface of the electrode assembly 10, which facilitates reliable connection between the tabs 122 and the current collecting discs 30 (shown in FIG. 3), and the risk that the tabs 122 are welded through while being welded with the current collecting discs 30. Moreover, the width A of the tabs 122 cannot to be excessively large, so that the material cost can be effectively reduced.

With reference to FIG. 9, in some embodiments of the present application, the width B of the first connecting portions 1222 is 0.5 mm to 3 mm.

It is to be noted that the width B of the first connecting portions 1222 is greater than or equal to 0.5 mm and less than or equal to 3 mm.

With reference to FIG. 6, FIG. 7 and FIG. 8, by the above solution, with adoption of the width B of the first connecting portions 1222, the positions of the weakening mark 1221 can be moderate. On this basis, the first connecting portions 1222 can be conveniently bent along the weakening marks 1221, and it can be guaranteed that the bent first connecting portions 1222 can basically completely shield the gap between two adjacent circles of the electrode plates 12, so that the shielding effect of the bent first connecting portions 1222 on the external particles can be effectively guaranteed and improved, and the yield of the electrode assembly 10 can be effectively guaranteed and improved. In addition, it can be guaranteed that the tabs 122 can have enough feeding allowance for compression after the first connecting portions 1222 are bent, so that it can be guaranteed that the tabs 122 can have enough compaction thickness and compactness after being compressed to the end surface of the electrode assembly 10, which facilitates reliable connection (as shown in FIG. 3) between the tabs 122 and the current collecting discs 30.

With reference to FIG. 9, in some embodiments of the present application, the width B of the first connecting portions 1222 is smaller than the width C of the second connecting portions 1223.

It is to be noted that when the electrode plates 12 are in the unfolded state, the width B of the first connecting portions 1222 refers to the size of the first connecting portions 1222 in the first direction y, the width C of the second connecting portions 1223 refers to the size of the second connecting portions 1223 in the first direction y, and B<C.

With reference to FIG. 6, FIG. 7 and FIG. 8, by the above solution, on the basis that the width B of the first connecting portions 1222 is guaranteed to be moderate, and the first connecting portions 1222 can be guaranteed to realize a reliable blocking effect on the external particles after being bent, the width C of the second connecting portions 1223 is greater than the width B of the first connecting portions 1222, so that the second connecting portions 1223 can provide enough feeding allowance for compression, and the tabs 122 can be guaranteed to have enough compaction thickness and compactness after being compressed to the end surface of the electrode assembly 10, which facilitates reliable connection between the tabs 122 and the current collecting discs 30 (as shown in FIG. 3), and the risk that the tabs 122 are welded through when being welded with the current collecting discs 30 can be reduced.

With reference to FIG. 8 and FIG. 9, in some embodiments of the present application, the electrode plates 12 are in the shape of long strips, and the extension length of the tabs 122 is the same as that of the active substance portions 121.

It is to be noted that when the electrode plates 12 are in the unfolded state, the extension length of the tabs 122 refers to the size of the tabs 122 in the extension direction x of the electrode plates 12, and the extension length of the active substance portions 121 refers to the size of the active substance portions 121 in the extension direction x of the electrode plates 12. The extension length of the tabs 122 is the same as that of the active substance portions 121, namely the extension length of the tabs 122 is equal to that of the active substance portions 121, namely the tabs 122 are full-tabs 122.

By the above solution, the extension length of the tabs 122 can be equal to that of the active substance portions 121, so that the overcurrent capability of the electrode assembly 10 can be reliably enhanced, and the procedures of die cutting and molding the tabs 122 and the like can be effectively simplified, and therefore the processing convenience and the production efficiency of the electrode assembly 10 can be effectively guaranteed and improved, and the performance and the quality of the electrode assembly 10 can be effectively guaranteed and improved.

With reference to FIG. 4, FIG. 5 and FIG. 6, in some embodiments of the present application, the tabs 122 are wound to form a multi-circle structure, and the first connecting portions 1222 of two adjacent circles are overlapped.

It is to be noted that in the roll-like electrode assembly 10, the tabs 122 are also wound to form the multi-circle structure. In the two adjacent circles of tabs 122, the first connecting portions 1222 of the two circles of tabs 122 are obliquely arranged towards the same side, the first connecting portions 1222 of the tabs 122 located on the outer circle can be overlapped to the first connecting portions 1222 of the tabs 122 located on the inner circle, or the first connecting portions 1222 of the tabs 122 located on the inner circle can be overlapped to the first connecting portions 1222 of the tabs 122 located on the outer circle.

By the above solution, the first connecting portions 1222 of the two adjacent circles can be overlapped, so that the bent first connecting portions 1222 can basically and completely shield the gap between the two adjacent circles of tabs 122, the shielding effect of the bent first connecting portions 1222 on the external particles can be effectively guaranteed and improved, and the yield of the electrode assembly 10 can be effectively guaranteed and improved.

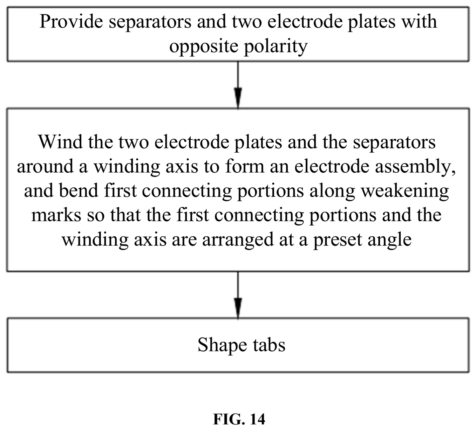

With reference to FIG. 14, some embodiments of the present application further provide a manufacturing method for an electrode assembly 10. The manufacturing method for the electrode assembly 10 is used for manufacturing the electrode assembly 10 provided by the embodiments of the present application. The manufacturing method for the electrode assembly 10 includes the following step:
providing the separators 11 and the two electrode plates 12 with opposite polarities, in which, each electrode plate 12 includes the active substance portion 121 and the tab 122 which are arranged side by side in the first direction y, the tab 122 includes the weakening mark 1221, the first connecting portion 1222 and the second connecting portion 1223, the weakening mark 1221 is connected between the first connecting portion 1222 and the second connecting portion 1223, and the second connecting portion 1223 is arranged on the side of the weakening mark 1221 close to the active substance portion 121, and the first connecting portion 1222 is arranged on the side of the weakening mark 1221 facing away from the active substance portion 121. It is to be noted that with reference to FIG. 4, in this step, two continuous electrode plates 12 and two continuous separators 11 can be prepared, one continuous separator 11 is arranged between the two continuous electrode plates 12 in a laminated manner, and the other continuous separator 11 is arranged on the side of one continuous electrode plate 12 facing away from the other continuous electrode plate 12 in a laminated manner, so that the two electrode plates 12 and the two separators 11 are arranged in a laminated manner. The prepared electrode plates 12 are the electrode plates 12 provided by the embodiments of the present application; and the weakening marks 1221 are preset on the tabs 122 of the electrode plates 12, and the tabs 122 are divided into the first connecting portions 1222, the second connecting portions 1223, and the weakening marks 1221 connected between the first connecting portions 1222 and the second connecting portions 1223. The weakening marks 1221 can weaken the structural strength of the areas where the weakening marks 1221 are located and form bending guide lines. The specific arrangement and the specific effects of the electrode plates 12 can be referred to the above, which will not listed herein by the embodiments.

The two electrode plates 12 and the separators 11 are wound around the winding axis L to form the electrode assembly 10, and the first connecting portions 1222 are bent along the weakening marks 1221, so that the first connecting portions 1222 and the winding axis L are arranged at the preset angle α, in which, the preset angle alpha is larger than 0°, and the winding axis L is parallel to the first direction y. It is to be noted that with reference to FIG. 4, FIG. 5 and FIG. 6, in this step, the two electrode plates 12 and the separators 11 which are arranged in a laminated mode can be wound around the winding axis L by a winding apparatus to form the roll-like electrode assembly 10, and the specific structure of the winding apparatus is not limited in the embodiments. During winding the two electrode plates 12 and the separators 11 which are arranged in the laminated mode to form the electrode assembly 10, the first connecting portions 1222 can be bent relative to the second connecting portions 1223 along the weakening marks 1221, so that the first connecting portions 1222 and the winding axis L are arranged at the preset angle α that is larger than 0°. On this basis, the bent first connecting portions 1222 can shield at least part of the gap between adjacent circles of tabs 122.

The tabs 122 are shaped to make the first connecting portions 1222, the weakening marks 1221 and part of the second connecting portions 1223 in a compressed state. It is to be noted that with reference to FIG. 5, FIG. 7 and FIG. 8, after winding, the tabs 122 can be compressed to the end surface of the electrode assembly 10, specifically, the first connecting portions 1222, the weakening marks 1221 and part of the second connecting portions 1223 can be compressed to the end surface of the main body portion 13 close to the tabs 122, and therefore the tabs 122 can be shaped into a dense tab end surface conveniently, which facilitates the tabs 122 to be connected to the current collecting discs 30. In addition, in the previous step, the bent first connecting portions 1222 can shield at least part of the gap between the adjacent circles of tabs 122, so that in this step, the bent first connecting portions 1222 can effectively block the external particles from falling into the electrode assembly 10 along the gap between the adjacent circles of tabs 122, particularly, can effectively block the particles generated by friction of an external tool falling into the electrode assembly 10, and therefore the yield of the electrode assembly 10 can be effectively guaranteed and improved.

By the above solution, the electrode assembly 10 provided by the embodiment of the present application can be conveniently and rapidly manufactured. Moreover, when manufacturing the electrode assembly 10, the first connecting portions 1222 can be bent along the weakening marks 1221, so that the bent first connecting portion 1222 can shield at least part of the gap between adjacent circles of tabs 122; and on this basis, in steps of "shaping the tabs 122" after winding and the like, the bent first connecting portions 1222 effectively block the external particles from falling into the electrode assembly 10 along the gap between the adjacent circles of tabs 122, so that the yield of the electrode assembly 10 can be effectively guaranteed and improved.

With reference to FIG. 4, FIG. 5 and FIG. 6, in some embodiments of the present application, the preset angle α is 30° to 90°.

It is to be noted that the preset angle α is an included angle between the first connecting portions 1222 and the winding axis L and basically corresponds to a bending angle of the first connecting portions 1222 relative to the second connecting portions 1223; and in the embodiments, the preset angle α is greater than or equal to 30° and less than or equal to 90°.

By the above solution, during winding, the first connecting portions 1222 of the tabs 122 can be bent along the weakening marks 1221, so that the first connecting portions 1222 and the winding axis L form 30° to 90°. On this basis, the bending effect of the first connecting portions 1222 can be guaranteed, and particularly the shielding effect of the bent first connecting portions 1222 on the gap between the adjacent circles of tabs 122 can be guaranteed.

With reference to FIG. 2 and FIG. 8, some embodiments of the present application further provide a battery 1 which includes the electrode assembly 10 provided by the embodiment of the present application.

By the above solution, the quality and the use safety of the battery 1 can be improved by using the electrode assembly 10 provided by the embodiment of the present application.

With reference to FIG. 1, some embodiments of the present application provide an electrical apparatus which includes the battery 1 provided by the embodiment of the present application.

By the above solution, the quality and the use safety of the electrical apparatus can be guaranteed and improved by using the battery 1 provided by the embodiment of the present application.

The above are only preferred embodiments of the present application and are not intended to limit the present application. Any modifications, equivalent substitutions, or improvements made within the spirit and principles of the present application should be included within the scope of protection of the present application.

## Claims

1. An electrode assembly, comprising separators and two electrode plates with opposite polarities, wherein the two electrode plates and the separators are arranged in a winding mode, each electrode plate comprises an active material portion and a tab which are arranged side by side along a first direction, and the first direction is parallel to a winding axis;
each tab comprises a weakening mark, a first connecting portion and a second connecting portion, wherein the weakening mark is connected between the first connecting portion and the second connecting portion, the second connecting portion is arranged on the side of the weakening mark close to the active material portion, and the first connecting portion is arranged on the side of the weakening mark facing away from the corresponding active material portion; and the weakening mark is configured to guide the first connecting portion to be bent, so that the first connecting portion and the winding axis are arranged at a preset angle, and the preset angle is greater than 0°.

2. The electrode assembly according to claim 1, wherein the electrode plates in an unfolded state are in a shape of long strips, and the weakening marks extend along an extension direction of the electrode plates.

3. The electrode assembly according to claim 2, wherein the weakening marks are in a shape of discontinuous lines.

4. The electrode assembly according to claim 3, wherein the weakening marks comprise a plurality of weakening grooves which extend along the extension direction of the electrode plates, and the plurality of weakening grooves are spaced apart along the extension direction of the electrode plates.

5. The electrode assembly according to claim 3, wherein the weakening marks comprise a plurality of weakening holes which are spaced apart along the extension direction of the electrode plates.

6. The electrode assembly according to claim 2, wherein the weakening marks are in a shape of continuous lines.

7. The electrode assembly according to any one of claims 1 to 6, wherein a plurality of weakening marks are arranged and are spaced apart along the first direction.

8. The electrode assembly according to any one of claims 1 to 7, wherein the width of the tabs is A, the width of the first connecting portions is B, and 5%≤B/A≤40%.

9. The electrode assembly according to claim 8, wherein the width A of the tabs is 4 mm to 15mm.

10. The electrode assembly according to claim 8, wherein the width B of the first connecting portions is 0.5 mm to 3 mm.

11. The electrode assembly according to any one of claims 8 to 10, wherein the width B of the first connecting portions is smaller than the width C of the second connecting portions.

12. The electrode assembly according to any one of claims 1 to 11, wherein the electrode plates in an unfolded state are in a shape of long strips; and the extension length of the tabs is the same as that of the active substance portions.

13. The electrode assembly according to any one of claims 1 to 12, wherein the tabs are wound to form a multi-circle structure, and the first connecting portions of every two adjacent circles are overlapped.

14. A manufacturing method for an electrode assembly, the manufacturing method for the electrode assembly being used for manufacturing the electrode assembly according to any one of claims 1 to 13, and the manufacturing method for the electrode assembly comprising the following steps:
providing the separators and the two electrode plates with opposite polarities, wherein each electrode plate comprises the active substance portion and the tab which are arranged in parallel along the first direction, the tab includes the weakening mark, the first connecting portion and the second connecting portion, the weakening mark is connected between the first connecting portion and the second connecting portion, the second connecting portion is arranged on the side of the weakening mark close to the corresponding active substance portion, and the first connecting portion is arranged on the side of the weakening mark facing away from the active substance portion;
winding the two electrode plates and the separators around the winding axis to form the electrode assembly, and bending the first connecting portions along the weakening marks so that the first connecting portions and the winding axis are arranged at the preset angle, wherein the preset angle is greater than 0°, and the winding axis is parallel to the first direction;
shaping the tabs to make the first connecting portions, the weakening marks and part of the second connecting portions at a compressed state.

15. The manufacturing method for an electrode assembly according to claim 14, wherein the preset angle is 30° to 90°.

16. A battery, comprising the electrode assembly according to any one of claims 1 to 13.

17. An electrical apparatus, comprising the battery according to claim 16.
